# EUROPEAN PATENT SPECIFICATION

(11) **EP 2 072 281 B1**
(45) Date of publication and mention of the grant of the patent: **25.04.2012**
(21) Application number: 08170807.5
(22) Date of filing: 05.12.2008
(51) Int. Cl.: B60C 1/00, C08K 9/04, C08K 9/06, C08K 5/548, C08K 3/36, C08L 21/00

(54) **Tire with tread rubber composition which contains dual silica moieties**
Reifen mit Laufflächen-Gummizusammensetzung, die Dual-Silica-Anteile enthält
Pneu avec composition de caoutchouc de la bande qui contient les caractéristiques de silice double

(30) Priority: 17.12.2007 US 957549; 17.12.2007 US 957751
(43) Date of publication of application: 24.06.2009
(73) Proprietor: The Goodyear Tire & Rubber Company, Akron, OH 44316-0001 (US)
(72) Inventor: Sandstrom, Paul Harry, Cuyahoga Falls, OH 44223 (US); Hua, Kuo-Chih, Richfield, OH 44286 (US); Futamura, Shingo, Wadsworth, OH 44281 (US); Bates, Kenneth Allen, Brunswick, OH 44212 (US)
(74) Representative: Kutsch, Bernd

(56) References cited:
- EP-A- 0 721 971
- EP-A- 1 142 730
- EP-A- 1 228 902
- US-A- 5 789 514
- US-A1- 2004 192 825
- US-A1- 2007 254 993

## Description

### Field of Invention

The invention relates to a tire having a tread of a cured rubber composition which contains dual silica moieties and to methods of preparing a respective rubber composition.

### Background of the Invention

Tires have previously been proposed which have treads of a rubber composition which contains hydrophilic silica or which contains hydrophilic silica which has been hydrophobated.

For example, see US-A- 4,474,908, US-A- 5,780,538, US-A- 6,127,468, US-A- 6,573,324 and US-A- 2005/0009955

A first aspect of this invention is to provide a tire tread of a rubber composition which contains a combination of hydrophilic precipitated silica and hydrophilic precipitated silica which has been hydrophobated in situ within the elastomer host. In other words, such tire tread rubber composition contains dual silica moieties in a sense of containing both hydrophilic precipitated silica and in situ hydrophobated precipitated silica.

In one embodiment, the hydrophobated precipitated silica is a hydrophilic precipitated silica which has been hydrophobated by treatment with an organoalkoxysilyl polysulfide (a silica coupling agent), optionally including an alkoxysilane, in situ within the rubber composition.

The hydrophilic precipitated silica is a precipitated silica which has not been hydrophobated with a hydrophobating agent, particularly not hydrophobated with a silane based hydrophobating agent, particularly a siloxane-containing hydrophobating agent for the hydrophilic precipitated silica.

In practice, it is considered herein that the rubber reinforcement contribution of such in situ hydrophobated precipitated silica is different than a rubber reinforcement contribution of the hydrophilic precipitated silica, particularly when the precipitated silica has been hydrophobated with said organoalkoxysilyl polysulfide coupling agent.

A second aspect of this invention is to provide a tire tread of a rubber composition which contains a combination of hydrophilic precipitated silica and pre-hydrophobated precipitated silica which has been hydrophobated prior to addition to the elastomer host. In other words, such tire tread rubber composition contains dual silica moieties in a sense of containing both hydrophilic precipitated silica and pre-hydrophobated precipitated silica.

The use of a combination of pre-hydrophobated precipitated silica (hydrophobated prior to addition to the elastomer host) together with hydrophilic precipitated silica for a tire tread rubber composition is significantly different from use of a combination of in situ hydrophobated precipitated silica (hydrophobated in situ within the elastomer host) together with hydrophilic precipitated silica for a tire tread rubber composition.

In particular, the silica pre-hydrophobation process is significantly different from the silica in situ hydrophobation process to thereby yield a different overall product.

When using the pre-hydrophobated silica as compared to using an in situ hydrophobated silica, the hydrophilic silica can be added to the rubber composition before, after, or simultaneously with the pre-hydrophobated silica and substantially maintain its hydrophilic nature which is a unique feature of this invention.

In one embodiment of the invention, the pre-hydrophobated precipitated silica is a hydrophilic precipitated silica which has been hydrophobated by pre-treatment with an organoalkoxysilyl polysulfide (silica coupling agent), alternately by pre-treatment with an organoalkoxysilyl polysulfide (silica coupling agent) which may optionally also include an alkoxysilane, prior to addition to the rubber composition.

The hydrophilic precipitated silica is a precipitated silica which has not been hydrophobated with a hydrophobating agent, particularly not hydrophobated with a silane based hydrophobating agent, particularly a siloxane-containing hydrophobating agent for the hydrophilic precipitated silica.

In practice, it is considered herein that the rubber reinforcement contribution of such pre-hydrophobated precipitated silica is different than a rubber reinforcement contribution of the hydrophilic precipitated silica, where the precipitated silica has been pre-hydrophobated (prior to its addition to the rubber composition) with said organoalkoxysilyl polysulfide.

Historically, synthetic amorphous precipitated silica is typically hydrophilic (water loving) in nature and therefore not readily compatible with diene-based elastomers in rubber compositions in general. For this reason, for rubber compositions which contain a significant precipitated silica content, it is often desirable to hydrophobate the precipitated silica to make it more compatible with diene-based elastomers in a rubber composition for a tire tread.

For this invention, while the mechanism is not fully understood, it has been observed that use of a combination of dual precipitated silica moieties, namely a combination of in situ hydrophobated precipitated silica (particularly when hydrophobated in situ with an organoalkoxysilyl polysulfide and hydrophilic precipitated silica, or a combination of pre-hydrophobated precipitated silica, particularly when pre-hydrophobated with an organoalkoxysilyl polysulfide (prior to its addition to the rubber composition) and hydrophilic precipitated silica, in a diene-based elastomer tire tread compositionin a diene-based elastomer tire tread composition can beneficially provide a tire tread with one or more physical properties which are different than when using only such hydrophobated precipitated silica or when only using a hydrophilic precipitated silica. For example, it has been observed that a tire tread running surface having a relatively high wet coefficient of friction can be obtained by using such combination of dual silica moieties as compared to a tire tread containing a significant in situ hydrophobated or pre-hydrophobated precipitated silica content (particularly when hydrophobated in situ or pre-hydrophobated with such silica coupling agent) without the presence of a hydrophilic precipitated silica. Apparently, the silica coupling agent in situ treated or pre-treated precipitated silica acts to enhance desirable physical properties of the tire tread rubber composition, whereas the hydrophilic precipitated silica does little to enhance the tread rubber physical properties in the manner of the hydrophobic precipitated silica but, instead, particularly enhances the wet coefficient of friction of the tread rubber running surface in a manner which is significantly better than obtained with the hydrophobated silica.

Accordingly, while the mechanism may not be completely understood, it is envisioned that the hydrophobated precipitated silica enhances desirable physical properties and that the hydrophilic ("water loving") precipitated silica can beneficially enhance an increase in wet traction of the tread rubber surface and therefore is beneficial for a tire tread in a sense of traction performance for wet driving conditions.

In the description of this invention, the term "phr" relates to parts by weight for a material or ingredient per 100 parts by weight elastomer(s)". The terms "rubber" and "elastomer" may be used interchangeably unless otherwise indicated. The terms "cure" and "vulcanize" may be used interchangeably unless otherwise indicated.

US-A- 2007/254993 discloses a rubber composition for a tread of a tire which comprises hydrophilic precipitated silica and pre-hydrophobated silica. The pre-hydrophobated silica is pre-hydrophobated with a fluorinated silane prior to mixing with the elastomer.

EP-A- 1 228 902 discloses a tire tread rubber composition comprising pre-hydrophobated aggregates of precipitated silica or wherein a coupling agent is directly added to an elastomer mixture comprising a precipitated silica.

EP-A 1 142 730 describes a tire comprising a rubber composition containing pre-hydrophobated silica aggregates as being prepared by treatment of a colloidal silica with a combination of an organomercaptosilane and an alkylsilane.

### Summary and Practice of the Invention

In accordance with this invention, a tire according to claim 1 and methods according to claims 8 and 10 are provided.

Dependent claims refer to preferred embodiments of the invention.

Preferably, the rubber composition is included in the running surface of the tread.

The hydrophobating agent comprises a bis (3-triethoxysilylpropyl) polysulfide.

The in situ hydrophobated precipitated silica preferably is a hydrophilic precipitated silica which is hydrophobated in situ within the rubber composition.

The pre-hydrophobated precipitated silica is preferably a hydrophilic precipitated silica which is hydrophobated prior to its addition to the rubber composition.

In the method of preparing the rubber composition of claim 8, the blending in step (A) is preferably done at a temperature in a range of from 135°C to 175°C. After step (B), and prior to step (C), it is preferred that the rubber composition is allowed to cool to a temperature below 40°C.

A significant aspect of the inventive method is the initial hydrophobation of a hydrophilic precipitated silica with said hydrophobating agent in situ within a rubber composition in a mixing step within an internal rubber mixer, removal of the hydrophobated silica-containing rubber composition from the internal rubber mixer, followed by a separate addition in a separated mixing stage, i.e. a completely separate addition from said initial, or first, addition of a hydrophilic precipitated silica, of an additional hydrophilic precipitated silica in a subsequent mixing step in a internal rubber mixer in the absence of additionally adding a silane based hydrophobation agent for said additional hydrophilic precipitated silica.

This is considered herein as being significant in a sense that the aforesaid separated mixing steps for a precipitated silica with a rubber composition enables the preparation of a rubber composition which contains dual silica moieties in a form of a combination of both hydrophobic precipitated silica and hydrophilic precipitated silica for a sulfur cured rubber tread.

In practice, as hereinbefore indicated, said hydrophobating agent for said hydrophilic precipitated silica for the purposes of this invention, is organosiloxysilyl polysulfide.

In practice, the organoalkoxysilyl polysulfides is a bis(3-trialkoxysilylpropyl) polysulfide having an average of from 2 to 3.8, alternately an average of from 2 to 2.6, sulfur atoms in its polysulfidic bridge, namely a bis(3-triethoxysilylpropyl) polysulfide.

The weight ratio of hydrophilic precipitated silica to pre-hydrophobated precipitated silica is at least 1/1, alternately at least 2/1, where a balance between cured tread rubber physical properties contributed by the presence of the pre-hydrophobated precipitated silica and tread surface wet coefficient of friction separately contributed by the presence of the hydrophilic precipitated silica is desired.

The method of preparation of the dual moiety precipitated silica reinforced rubber composition for a tire tread comprises mixing a combination of pre-hydrophobated precipitated silica and hydrophilic precipitated silica with a rubber composition containing at one conjugated diene-based elastomer, without an addition of a silica coupling agent or alkoxysilane silica hydrophobating agent to the rubber composition (so that the afore said dual moieties of precipitated silica is provided, namely so that the added hydrophilic silica remains primarily hydrophilic in nature);
wherein said pre-hydrophobated precipitated silica is a precipitated silica having been hydrophobated prior to its addition to the elastomer host.

For example, a method of preparation of a precipitated silica reinforced rubber composition for a tire tread is provided which comprises at least two preparatory non-productive mixing steps followed by a productive mixing step, which comprises, based upon parts by weight per 100 parts by weight rubber (phr):
(A) blending a pre-hydrophobated precipitated silica with a rubber composition comprising at least one conjugated diene-based elastomer in at least one preparatory non-productive mixing step in an internal rubber mixer, preferablyat a temperature in a range of from 135°C to 175°C;
(B) removing said pre-hydrophobated precipitated silica-containing rubber composition from its internal rubber mixer, and preferably allowing said rubber composition to thereafter cool to a temperature below about 40°C;
(C) blending a hydrophilic precipitated silica with said pre-hydrophobated precipitated silica-containing rubber composition in at least one different and subsequent preparatory non-productive mixing step (subsequent to said preparatory non-productive mixing step in which said pre-hydrophobated precipitated silica is added) in an internal rubber mixer, (in the absence of addition of a silane-containing hydrophobating agent for said hydrophilic precipitated silica) to form a rubber composition which contains dual silica moieties in a form of a combination of said pre-hydrophobated precipitated silica and said hydrophilic precipitated silica,
wherein said pre-hydrophobated silica is hydrophobated prior to its addition to said rubber composition with an hydrophobating agent comprising an organosiloxysilyl polysulfide.

For example, a method of preparation of a precipitated silica reinforced rubber composition for a tire tread is provided comprising at least one preparatory non-productive mixing step followed by a productive mixing step, which comprises, based upon parts by weight per 100 parts by weight rubber (phr):
(A) blending a pre-hydrophobated precipitated silica with a rubber composition comprised of at least one conjugated diene-based elastomer in at least one preparatory non-productive mixing step in an internal rubber mixer, preferably at a temperature in a range of from 135°C to 175°C);
(B) blending a hydrophilic precipitated silica with said pre- hydrophobated precipitated silica-containing rubber composition in the same non-productive mixing step (before or after the addition of said pre-hydrophobated silica) in an internal rubber mixer, (in the absence of addition of a silane-containing hydrophobating agent for said hydrophilic additional precipitated silica) to form a rubber composition which contains dual silica moieties in a form of a combination of said pre-hydrophobated precipitated silica and said hydrophilic precipitated silica,
wherein said pre-hydrophobated silica is hydrophobated prior to its addition to said rubber composition with an hydrophobating agent comprising an organosiloxysilyl polysulfide.

In practice, as hereinbefore indicated, said hydrophobating agent for pre-hydrophobating said hydrophilic precipitated silica for the purposes of this invention, is organosiloxysilyl polysulfide.

In practice, the organoalkoxysilyl polysulfides is a bis(3-trialkoxysilylpropyl) polysulfide having an average of from 2 to 3.8, optionally from 2 to 2.6, sulfur atoms in its polysulfidic bridge, namely a bis(3-triethoxysilylpropyl) polysulfide.

In practice, representative of said alkoxysilane is, for example, an alkoxysilane of the general formula (I):

(I) Zn - Si - R4-n

wherein R is a saturated alkyl radical having from one to 18, preferably from one to 8, carbon atoms such as, for example, methyl, ethyl, isopropyl, n-butyl and octadecyl radicals, n is a value of from 1 to 3 and Z is an alkoxy radical represented as (R1O) -, wherein R1 is a saturated alkyl radical having from one to 3 carbon atoms such as, for example, methyl, ethyl and isopropyl radicals, preferably at least one of methyl and ethyl radicals.

Representative examples of alkoxysilanes of Formula (I) are, for example, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Accordingly, said alkoxysilanes have an alkoxy group being reactive with the hydroxyl groups (e.g. silanol groups) contained on the surface of the precipitated silica aggregates.

In the practice of this invention, the tread of the tire may be a rubber composition comprising various conjugated diene based elastomers. Such diene-based elastomers may be polymers and copolymers of conjugated dienes, such as, for example, isoprene and 1,3-butadiene, and copolymers of at least one conjugated diene hydrocarbon and vinyl aromatic compound selected from styrene and alphamethyl styrene, preferably styrene.

For example, representative of such elastomers are natural cis 1,4-polyisoprene rubber, synthetic cis 1,4-polyisoprene rubber, cis 1,4-polybutadiene rubber, high vinyl polybutadiene rubber having a vinyl 1,2 content in a range of 10 percent to 90 percent, styrene/butadiene copolymer (SBR) rubber (aqueous emulsion or organic solution polymerization prepared copolymers) and including organic solvent polymerization prepared SBR having a vinyl 1,2- content in a range of 10 to 90 percent based on its polybutadiene derived portion and a polystyrene content in a range of 10 to 60 percent based upon the copolymer, styrene/high trans 1,4-butadiene copolymer rubber having a trans-1,4 content in the range of 40 to 80 percent based on its polybutadiene derived portion, styrene/isoprene/butadiene terpolymer rubber, butadiene/acrylonitrile rubber, styrene/isoprene copolymer and isoprene/butadiene copolymer rubber, 3,4-polyisoprene rubber and trans 1,4-polybutadiene rubber.

Further representative of such elastomers are functionalized elastomers as, for example, amine and silane functionalized organic solution polymerization prepared styrene/butadiene copolymers (functionalized S-SBR's) and amine and silane functionalized organic solution polymerization prepared cis 1,4-polybutadiene elastomers may also be used.

Additional representative of such elastomers are, for example, organic solution polymerization prepared tin coupled elastomers such as for example, tin coupled styrene/butadiene copolymers may also be used.

Tin coupled copolymers of styrene/butadiene may be prepared, for example, by introducing a tin coupling agent during the styrene/1,3-butadiene monomer copolymerization reaction in an organic solvent solution, usually at or near the end of the polymerization reaction.

In practice, it is usually preferred that at least 50 percent and more generally in a range of 60 to 85 percent of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, elastomers are, for example, styrene/butadiene copolymer elastomers exemplified for example in US-A-5,064,901.

Various commercially available amorphous synthetic silicas (precipitated silicas) may be added to the rubber composition for the reinforcement of the diene based elastomers. Such silicas may be characterized by the their BET and CTAB surface areas. Representative of such silicas are silicas available from PPG Industries under the Hi-Sil trademark with designations 210, 243, etc; silicas available from Rhodia, with designations of Zeosil 1165MP and Zeosil 165GR, silicas available from Degussa AG with designations VN2 and VN3, and silicas available from Huber such as Zeopol 8745 and Zeopol 8715.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins and plasticizers, fillers, pigments, fatty acid, zinc oxide, waxes, antioxidants and antiozonants, peptizing agents and reinforcing materials.

The tires can be built, shaped, molded and cured by various methods which will be readily apparent to those having skill in such art.

The following Examples are provided to further understand the invention. The parts and percentages are by weight unless otherwise indicated.

### EXAMPLE I

An evaluation is made for providing a tire tread, including its running surface, of a rubber composition which contains dual silica moieties in a sense of a hydrophilic precipitated silica and an in situ hydrophobic precipitated silica.

Such rubber composition is prepared by hydrophobating a hydrophilic precipitated silica in situ within the rubber composition to form an in situ hydrophobated precipitated silica with a silane based hydrophobating agent, namely a bis(3-triethoxysilylpropyl) polysulfide silica coupler, followed by adding additional hydrophilic precipitated silica to the rubber composition in a separate, subsequent, mixing step.

Rubber compositions identified herein as rubber Samples A, B, C and D were prepared and the rubber Samples evaluated for wet and dry coefficients of friction (COF).

Control rubber Sample A contains only a hydrophilic precipitated silica without a hydrophobated precipitated silica.

Experimental rubber Sample B (the invention) contains dual silica moieties, namely:
(A) an in situ hydrophobated precipitated silica which is a hydrophilic precipitated silica hydrophobated in situ within the rubber composition by a silica coupler in the first non-productive mixing stage (NP1), and
(B) a hydrophilic precipitated silica added in a separate, subsequent, sequential non-productive mixing step (NP2) without addition of a coupling agent.

Comparative experimental rubber Samples C and D contained:
(A) an in situ hydrophobated precipitated silica which is a hydrophilic precipitated silica added in the first non-productive mixing stage (NP1) and hydrophobated in situ within the rubber composition by a silica coupler in the first non-productive mixing stage (NP1), and
(B) an additional in situ hydrophobated precipitated silica which is a hydrophilic precipitated silica added in the second non-productive mixing stage and hydrophobated in situ within the rubber composition by addition of a silica coupler in the said second non-productive mixing stage.

The rubber Samples were prepared by mixing polyisoprene rubber with reinforcing fillers in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160oC to which additional hydrophilic precipitated silica was added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

In this manner, then, the second addition of the hydrophilic precipitated silica is completely separate from and disconnected from the first addition of the hydrophilic precipitated silica and its associated hydrophobation agent (silica coupler). It is therefore considered herein that little or no hydrophobation agent remains from the first hydrophobation agent addition to significantly hydrophobate the second addition of the hydrophilic precipitated silica.

The basic formulation for the comparative rubber Samples A, B, C and D is presented in the following Table 1 expressed in parts by weight per 100 parts of rubber unless otherwise indicated.

**Table 1**

| | Samples | | | |
|---|---|---|---|---|
| First Non-Productive Mixing Stage (NP1) | A | B | C | D |
| Synthetic polyisoprene rubber¹ | 100 | 100 | 100 | 100 |
| Carbon black² | 20 | 20 | 20 | 20 |
| Processing oil | 6 | 6 | 6 | 6 |
| Fatty acid³ | 2 | 2 | 2 | 2 |
| Antidegradant(s)⁴ | 2 | 2 | 2 | 2 |
| Precipitated (hydrophilic) silica⁵ | 15 | 15 | 15 | 15 |
| Zinc oxide | 5 | 5 | 5 | 5 |
| Silica coupler(50/50 carbon black composite)⁶ | 0 | 2.5 | 3 | 4 |
| Second Non-Productive Mixing Stage (NP2) | | | | |
| Precipitated (hydrophilic) silica⁵ | 15 | 15 | 15 | 15 |
| Silica coupler(50/50 carbon black composite)⁶ | 0 | 0 | 2 | 3.5 |
| Productive Mixing Stage (P) | | | | |
| Sulfur | 1.4 | 1.4 | 1.4 | 1.4 |
| Accelerator(s)⁷ | 2.2 | 2.2 | 2.2 | 2.2 |

| | | | | |
|---|---|---|---|---|
| ¹Cis 1,4-polyisoprene rubber as NAT 2200 from The Goodyear Tire & Rubber Company ²N299, rubber reinforcing carbon black, ASTM identification ³Primarily stearic acid (at least 90 percent by weight stearic acid) ⁴Quinoline based antidegradant ⁵Precipitated silica as HiSil 210™ from PPG ⁶Silica coupler comprised of bis(3-triethoxysilylpropyl) polysulfide having an average of from about 2.2 to about 2.6 connecting sulfur atoms in its polysulfidic bridge with a carbon black carrier in a 50/50 weight ratio (therefore 50 percent active as a coupler) and reported in the Table as the composite, obtained as SI266™ from Degussa. ⁷Sulfenamide and quanidine type of accelerators | | | | |

The following Table 2 illustrates cure behavior and various physical properties of rubber compositions based upon the basic recipe of Table 1 and reported herein as Control Sample A, Sample B and comparative Samples C and D. Where cured rubber samples are examined, such as for the stress-strain, hot rebound and hardness values, the rubber samples were cured for 12 minutes at a temperature of 170°C.

The heading for Table 2 shows the respective non-productive mixing steps, namely NP1 and NP2, in which the respective hydrophilic silica and hydrophobating agent (silica coupler) were added.

**Table 2**

| | Samples | | | |
|---|---|---|---|---|
| | Control | Invention | Comparative | |
| | A | B | C | D |
| Carbon black (added in NP1) | 20 | 20 | 20 | 20 |
| Silica, hydrophilic (added in NP1) | 15 | 15 | 15 | 15 |
| Silica Coupler (added inNP1) | 0 | 2.5 | 3 | 4 |
| Silica, hydrophilic (added inNP2) | 15 | 15 | 15 | 15 |
| Silica Coupler (added in NP2) | 0 | 0 | 2 | 3.5 |

| *Coefficient of Friction¹* | | | | |
|---|---|---|---|---|
| Wet substrate | 2.6 | 2.4 | 1.5 | 1.2 |
| Dry substrate | 2.8 | 2.8 | 2.9 | 2.6 |

| *Stress-strain, ATS² 14 min, 160 °C* | | | | |
|---|---|---|---|---|
| Tensile strength (MPa) | 20.7 | 22.8 | 23.3 | 23.7 |
| Elongation at break (%) | 666 | 581 | 557 | 535 |
| 300 % modulus, ring (MPa) | 3.9 | 8.2 | 9.7 | 11 |

| *Rebound* | | | | |
|---|---|---|---|---|
| 23 °C | 46 | 51 | 50 | 50 |
| 100°C | 60 | 65 | 64 | 65 |
| Shore A Hardness, 23°C | 57 | 64 | 67 | 69 |

| *RPA³ (100°C), Storage Modulus G', MPa* | | | | |
|---|---|---|---|---|
| Uncured G' 15 % strain | 0.18 | 0.18 | 0.18 | 0.18 |
| Cured G' modulus, 10% strain | 1.2 | 1.4 | 1.5 | 1.6 |

| | | | | |
|---|---|---|---|---|
| ¹ASTM D-1894. A coefficient of friction (COF) value for a rubber sample may be measured, for example, on a Model SP-2000 Slip/Peel tester from IMASS Inc at 6 inches (about 15.2 cm) per minute using a 200g sled against a substrate surface such as, for example, a polished aluminum surface. ²Automated Testing System (ATS) instrument by the Instron Corporation which can incorporate as many as six tests in one system. Such instrument may determine ultimate tensile, ultimate elongation, moduli, etc. ³Rubber Process Analyzer as RPA 2000™ instrument by Alpha Technologies | | | | |

In the above Table 2, it can be seen that the hydrophilic precipitated silica was added in both the first (NP1) and the second (NP2) separate non-productive mixing stages (it was removed from the internal rubber mixer of the NP1 mixing stage, cooled to below 40°C and then mixed in the NP2 mixing stage in an internal rubber mixer).

It can be observed in Table 2 that, for the dry coefficient of friction, addition of increasing levels of silica coupler to Control rubber Sample A, namely for rubber Samples B, C and D, had no significant effect, although physical properties such as tensile strength, 300 percent modulus, rebound and cured storage modulus (G') at 10 percent strain were significantly improved.

It can further be observed in Table 2 for the wet coefficient of friction, a combined addition of both hydrophilic silica and silica coupler (hydrophobating agent) to both of the sequential non-productive mixing stages (NP1 and NP2) in Samples C and D to therefore form an in situ hydrophobated silica in both the NP1 and NP2 mixing stages had a significant and rather dramatic negative effect on the wet coefficient of friction (wet COF) with reduced values of only 1.5 and 1.2 as compared to a value of 2.6 for the Control rubber Sample A.

In sharp contrast, it can next be observed in Table 2 that, for Sample B, which represents this invention, addition of hydrophilic precipitated silica in the separate, second non-productive mixing stage (NP2) without an accompanying addition of the silica coupler (hydrophobating agent) resulted in a comparable wet coefficient of friction (wet COF), namely a value of 2.4, to that of the Control rubber Sample A which has a desirably high wet coefficient of friction (wet COF) value of 2.6.

The sharp contrast becomes even more evident when observing that the beneficial wet coefficient of friction (wet COF) of the surface of rubber Sample B was obtained while other physical properties were significantly improved as compared to Control rubber Sample A, a combination which was not observed for rubber Samples C and D which, instead, had dramatically poorer wet coefficients of friction.

Accordingly, it is concluded from this Example that the addition of the hydrophilic silica and silica coupler (hydrophobation agent) in the first non-productive mixing step (NP1), followed by a separated sequential addition of hydrophilic silica in a second non-productive mixing step (NP2) without the coupling agent addition (hydrophobation agent addition), enabled the preparation of a rubber composition which contained dual silica moieties in a form of an in situ hydrophobated precipitated silica (hydrophobated in situ within the rubber composition) and a hydrophilic precipitated silica where the in situ hydropobated silica promoted enhanced physical properties of the rubber composition (rubber Sample B) and where the presence of the hydrophilic precipitated silica promoted a suitable wet coefficient of friction (wet COF) for the surface of the rubber composition suitable for a cured tire tread, particularly including its running surface.

### Comparative EXAMPLE

Experiments were conducted to evaluate the effect of pre-hydrophobated precipitated silica versus hydrophilic precipitated silica moieties on dry and wet coefficients of friction for a rubber composition without the presence of a silica coupling agent.

Pre-hydrophobated silica was pre-hydrophobated (prior to addition to the elastomer host) with an alkoxy silane and no silica coupling agent. Further, no alkoxysilane or silica coupling agent was added to the elastomer host during the mixing of the rubber composition in an internal rubber mixer.

It is to be appreciated that, if desired, the pre-hydrophobated silica could be hydrophobated with a silica coupler, prior to its addition to the elastomer host, so that it can couple to the silica.

It is to be further appreciated that the order of addition of the pre-hydrophobated precipitated silica and hydrophilic precipitated silica can be added in any order to the elastomer host, if desired.

Rubber compositions identified herein as Comparative rubber Samples E, F, G and H were prepared and the comparative rubber Samples evaluated for wet and dry coefficients of friction (COF).

The Comparative rubber Samples were prepared by mixing polyisoprene rubber with reinforcing fillers, namely rubber reinforcing carbon black and hydrophilic precipitated silica together with a pre-hydrophobated silica in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160oC to which a hydrophilic precipitated silica was added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the comparative rubber Samples E, F, G and H is presented in the following Table 3 expressed in parts by weight per 100 parts of rubber unless otherwise indicated.

**Table 3**

| | Comparative Samples | | | |
|---|---|---|---|---|
| First Non-Productive Mixing Stage (NP1) | E | F | G | H |
| Natural rubber¹ | 100 | 100 | 100 | 100 |
| Carbon black² | 20 | 20 | 20 | 20 |
| Processing oil | 6 | 6 | 6 | 6 |
| Fatty acid³ | 2 | 2 | 2 | 2 |
| Antidegradant(s)⁴ | 2 | 2 | 2 | 2 |
| Hydrophobated (pre-treated) silica⁵ | 0 | 10 | 15 | 15 |
| Hydrophilic silica⁶ | 15 | 5 | 0 | 0 |
| Zinc oxide | 5 | 5 | 5 | 5 |

| Second Non-Productive Mixing Stage (NP2) | | | | |
|---|---|---|---|---|
| Hydrophobated (pre-treated) silica⁵ | 0 | 0 | 5 | 15 |
| Hydrophilic silica⁶ | 15 | 15 | 10 | 0 |

| Productive Mixing Stage (P) | | | | |
|---|---|---|---|---|
| Sulfur | 1.4 | 1.4 | 1.4 | 1.4 |
| Accelerator(s)⁷ | 2.2 | 2.2 | 2.2 | 2.2 |

| | | | | |
|---|---|---|---|---|
| ¹Cis 1,4-polyisoprene rubber (TRS20) ²N299, rubber reinforcing carbon black, ASTM identification ³Primarily stearic acid (at least 90 percent by weight stearic acid) ⁴Quinoline based antidegradant ⁵Precipitated silica pre-hydrophobated (pre-)treated with an alkoxysilane ⁶Precipitated silica as HiSil 210™ from PPG Industries ⁷Sulfenamide and quanidine type of accelerators | | | | |

The following Table 4 illustrates cure behavior and various physical properties of rubber compositions based upon the basic recipe of Table 3 and reported herein as a Comparative rubber Sample E and Comparative Samples F, G and H. Where cured rubber samples are examined, such as for the stress-strain, hot rebound and hardness values, the rubber samples were cured for 12 minutes at a temperature of 170°C.

**Table 4**

| | Comparative Samples | | | |
|---|---|---|---|---|
| | | | | |
| | E | F | G | H |
| Hydrophobated (pre-treated) silica (added in NP1) | 0 | 10 | 15 | 15 |
| Hydrophilic silica (added in NP1) | 15 | 5 | 0 | 0 |
| Hydrophobated (pre-treated) silica (added in NP2) | 0 | 0 | 5 | 15 |
| Hydrophilic silica (added in NP2) | 15 | 15 | 10 | 0 |
| Total hydrophobated silica | 0 | 10 | 20 | 30 |
| Total hydrophilic silica | 30 | 20 | 10 | 0 |
| Ratio of hydrophilic to hydrophobated silica | 30/0 | 20/10 | 10/20 | 0/30 |

| *Coefficient of Friction¹* | | | | |
|---|---|---|---|---|
| Wet substrate (wet coefficient of friction) | 2.6 | 1.6 | 1.1 | 1.3 |
| Dry substrate (dry coefficient of friction) | 2.8 | 2.8 | 2.9 | 2.9 |

| *Stress-strain, ATS² 14 min, 160 °C* | | | | |
|---|---|---|---|---|
| Tensile strength (MPa) | 20.7 | 21.4 | 21.5 | 21.8 |
| Elongation at break (%) | 666 | 571 | 568 | 577 |
| 300 % modulus, ring (MPa) | 3.9 | 6.6 | 6.5 | 6.3 |

| *Rebound* | | | | |
|---|---|---|---|---|
| 23 °C | 46 | 50 | 52 | 53 |
| 100°C | 60 | 66 | 69 | 69 |
| Shore A Hardness, 23°C | 57 | 63 | 60 | 59 |
| Shore A Hardness, 100°C | 53 | 60 | 58 | 57 |

| *RPA³ (100 °C), Storage Modulus G', MPa* | | | | |
|---|---|---|---|---|
| Uncured G' 15 % strain | 0.17 | 0.17 | 0.17 | 0.17 |
| Cured G' modulus, 10% strain | 1.2 | 1.5 | 1.4 | 1.3 |

| | | | | |
|---|---|---|---|---|
| ¹ASTM D-1894. A coefficient of friction (COF) value for a rubber sample may be measured, for example, on a Model SP-2000 Slip/Peel tester from IMASS Inc at 6 inches (about 15.2 cm) per minute using a 200g sled against a substrate surface such as, for example, a polished aluminum surface. ²Automated Testing System (ATS) instrument by the Instron Corporation which can incorporate as many as six tests in one system. Such instrument may determine ultimate tensile, ultimate elongation, moduli, etc. ³Rubber Process Analyzer as RPA 2000TM instrument by Alpha Technologies | | | | |

It can be seen in Table 4 that, for Compatative rubber Sample E where only a hydrophilic precipitated silica is used, the wet coefficient of friction for the Comparative rubber Sample is a suitable 2.6 and the dry coefficient of friction is 2.8.

It can be seen from Table 4 that addition of the pre-hydrophobated silica had little or no effect on the dry coefficient of friction as observed for Comparative rubber Samples F, G and H as compared to Comparative rubber Sample E.

It can, however, further be seen from Table 4 that an inclusion of dual silica moieties in a sense of replacement of a portion of the hydrophilic precipitated silica with pre-hydrophobated precipitated silica resulted in a significant reduction of the wet coefficient of friction while significantly improving physical properties such as 300 percent modulus, rebound, Shore A hardness and cured G' storage modulus for Comparative rubber Samples F, G and H.

Therefore is it readily seen that the effect of the presence of the dual silica moieties in the sense of inclusion of the hydrophilic silica in a pre-hydrophobated silica-containing rubber composition had a separate and definitive effect on wet surface coefficient of friction which was significantly different from the effect on dry surface coefficient of friction.

It is concluded that where it is desired to promote both a suitable wet coefficient of friction for a tire tread running surface combined with suitable tread rubber physical properties, the dual silica moieties can be used for the rubber composition.

It is envisioned that the presence of the pre-hydrophobated precipitated silica promotes the rubber physical properties for the tread rubber and the presence of the hydrophilic precipitated silica promotes the wet coefficient of friction for the tread running (ground-contacting) surface.

For such purpose, a balance of pre-hydrophobated precipitated silica and hydrophilic precipitated silica contents are appropriate depending on the balance of wet coefficient of friction and rubber physical properties desired for a particular tire tread.

For this Comparative Example, a weight ratio of the dual silica moiety of hydrophilic precipitated silica to pre-hydrophobated silica appears to be important to balance the surface wet coefficient of friction and rubber composition physical properties as exemplified by Comparative rubber Samples F, G and H in comparison to the Comparative rubber Sample E.

Comparative rubber Sample F of Table 4 is envisioned as presenting a better compromise, or balance, of wet coefficient of friction (contributed by the presence of the separate hydrophilic precipitated silica) and cured rubber physical properties (contributed by the separate pre-hydrophobated precipitated silica) in which a weight ratio of hydrophilic precipitated silica to pre-hydrophobated precipitated silica of 2/1 was used.

Accordingly, it is concluded that a threshold (minimum) weight ratio of the dual silica moieties of hydrophilic precipitated silica to the pre-hydrophobated precipitated silica may, for example, be at least 1/1 and more desirably at least 2/1, for the dual moiety silica-reinforced tire tread rubber composition.

## Claims

1. A tire with a circumferential rubber tread of a rubber composition which contains at least two silica moieties comprising hydrophilic precipitated silica as one of said two moieties, and hydrophobated precipitated silica as the other of said two moieties, wherein said hydrophobated precipitated silica is:
(A) in situ hydrophobated within the the rubber composition by treatment with an organoalkoxysilyl polysulfide comprising a bis(3-triethoxysilylpropyl) polysulfide having an average of from 2 to 3.8 connecting sulfur atoms in its polysulfidic bridge, and/or
(B) a pre-hydrophobated prior to its addition to the rubber composition by treatment with an organoalkoxysilyl polysulfide comprising a bis(3-triethoxysilylpropyl) polysulfide having an average of from 2 to 3.8 connecting sulfur atoms in its polysulfidic bridge.

2. The tire of claim 1 wherein the organoalkoxysilyl polysulfide is an organoalkoxysilyl polysulfide comprising a bis(3-triethoxysilylpropyl) polysulfide having an average of from 2 to 2.6 connecting sulfur atoms in its polysulfidic bridge.

3. The tire of claim 1 wherein the weight ratio of the hydrophilic precipitated silica to the hydrophobated precipitated silica is in a range of from 1.5/1 to 4/1.

4. The tire of claim 1 wherein the hydrophobated precipitated silica is the in situ hydrophobated precipitated silica.

5. The tire of claim 1 wherein the hydrophobated precipitated silica is the pre-hydrophobated precipitated silica.

6. The tire of at least one of the previous claims wherein the rubber composition comprises, based upon parts by weight per 100 parts by weight of rubber (phr):
(A) at least one conjugated diene-based elastomer;
(B) 30 to 120 phr of a reinforcing filler comprising:
(1) 30 to 120 phr of precipitated silica, or
(2) a combination of precipitated silica and a rubber reinforcing carbon black comprising 30 to 120 phr of precipitated silica and from zero up to 60 phr of rubber reinforcing carbon black;
wherein the precipitated silica comprises:
(a) 50 to 95 weight percent of the in situ hydrophobated precipitated silica, and 5 to 50 weight percent of the hydrophilic precipitated silica; or
(b) 20 to 80 weight percent, alternatively 20 to 50 weight percent, of the pre-hydrophobated precipitated silica, and 80 to 20 weight percent, alternatively 80 to 50 weight percent, of the hydrophilic precipitated silica.

7. The tire claim 2 wherein the weight ratio of hydrophilic precipitated silica to the hydrophobated precipitated silica is in a range of from 1.8/1 to 2.5/1.

8. A method of preparing a precipitated silica reinforced rubber composition for a tire tread which contains dual silica moieties comprising an in situ hydrophobated precipitated silica and a hydrophilic precipitated silica, wherein the method comprises at least two sequential preparatory non-productive mixing steps followed by a productive mixing step, and wherein the method comprises, based upon parts by weight per 100 parts by weight rubber (phr):
(A) blending a hydrophilic precipitated silica with a rubber composition comprising at least one conjugated diene-based elastomer in at least one preparatory non-productive mixing step in an internal rubber mixer, and hydrophobating said hydrophilic precipitated silica with a hydrophobating agent in situ within said rubber composition in at least one of said non-productive mixing steps to thereby form a hydrophobated precipitated silica-containing rubber composition;
(B) removing said hydrophobated precipitated silica-containing rubber composition from the internal rubber mixer; and
(C) blending a hydrophilic additional precipitated silica with said hydrophobated precipitated silica-containing rubber composition in at least one different and subsequent preparatory non-productive mixing step in an internal rubber mixer, to form a rubber composition which contains dual silica moieties in a form of a combination of said in situ hydrophobated precipitated silica and the hydrophilic additional precipitated silica;
wherein said in situ hydrophobated precipitated silica is hydrophobated in situ within the rubber composition by treatment with the hydrophobating agent as an organoalkoxysilyl polysulfide comprising a bis(3-triethoxysilylpropyl) polysulfide having an average of from 2 to 3.8 connecting sulfur atoms in its polysulfidic bridge.

9. The method of claim 8 wherein the subsequent mixing of the hydrophilic precipitated silica is administered:
(A) in a separate non-productive mixing step immediately following the precipitated silica in situ hydrophobation mixing step; or
(B) in a separate non-productive mixing step following the precipitated silica in situ hydrophobation mixing step with an additional separate non-productive mixing step therebetween; or
(C) in a separate, subsequent productive mixing step in which sulfur and sulfur curatives are added to the rubber composition.

10. A method of preparation of a dual moiety precipitated silica reinforced rubber composition for a tire tread which comprises mixing a combination of pre-hydrophobated precipitated silica and hydrophilic precipitated silica with a rubber composition containing at least one conjugated diene-based elastomer without an addition of a silica coupling agent or alkoxysilane silica hydrophobating agent to the rubber composition wherein said pre-hydrophobated precipitated silica is hydrophobated with a hydrophobating agent prior to its addition to said rubber composition, wherein the hydrophobating agent is an organoalkoxysilyl polysulfide comprising a bis(3-trialkoxysilylalkyl) polysulfide having an average of from 2 to 3.8 connecting sulfur atoms in is polysulfidic bridge.

11. The method of claim 10 wherein the organoalkoxysilyl polysulfide is an organoalkoxysilyl polysulfide comprising a bis(3-trialkoxysilylalkyl) polysulfide having an average of from 2 to 2.6 connecting sulfur atoms in is polysulfidic bridge.

12. The method of at least one of the claims 10 to 11 wherein the weight ratio of hydrophilic precipitated silica to pre-hydrophobated precipitated silica is at least 1/1.

13. The method of at least one of the previous claims 10 to 12 wherein said the mixing of the hydrophilic precipitated silica and pre-hydrophobated precipitated silica with the rubber composition is administered:
(A) in the same non-productive mixing step before or after the addition of the pre-hydrophobated precipitated silica, or
(B) in a separate non-productive mixing step following the addition of the pre-hydrophobated precipitated silica, or
(C) in a separate non-productive mixing step following the addition of the pre-hydrophobated precipitated silica with an additional separate non-productive mixing step therebetween, or
(D) in a separate, subsequent productive mixing step in which sulfur and sulfur curatives are added to the rubber composition.

## Patentansprüche

1. Reifen mit einer umfangsgerichteten Gummilauffläche aus einer Kautschukzusammensetzung, die mindestens zwei Silikaanteile enthält, die hydrophiles ausgefälltes Silika als einen der besagten zwei Anteile und hydrophobiertes ausgefälltes Silika als den anderen der besagten zwei Anteile umfassen, wobei das hydrophobierte ausgefällte Silika:
(A) durch Behandlung mit einem Organoalkoxysilylpolysulfid, das ein Bis(3-triethoxysilylpropyl)polysulfid mit einem Durchschnitt von 2 bis 3,8 verbindenden Schwefelatomen in seiner Polysulfidbrücke umfasst, in situ innerhalb der Kautschukzusammensetzung hydrophobiert ist, und/oder
(B) durch Behandlung mit einem Organoalkoxysilylpolysulfid, das ein Bis(3-triethoxysilylpropyl)polysulfid mit einem Durchschnitt von 2 bis 3,8 verbindenden Schwefelatomen in seiner Polysulfidbrücke umfasst, vor seinem Zusatz zu der Kautschukzusammensetzung vorhydrophobiert ist.

2. Reifen nach Anspruch 1, wobei das Organoalkoxysilylpolysulfid ein Organoalkoxysilylpolysulfid ist, das ein Bis(3-triethoxysilylpropyl)polysulfid mit einem Durchschnitt von 2 bis 2,6 verbindenden Schwefelatomen in seiner Polysulfidbrücke umfasst.

3. Reifen nach Anspruch 1, wobei das Gewichtsverhältnis des hydrophilen ausgefällten Silikas zu dem hydrophobierten ausgefällten Silika in einem Bereich von 1,5:1 bis 4:1 liegt.

4. Reifen nach Anspruch 1, wobei das hydrophobierte ausgefällte Silika das in situ hydrophobierte ausgefällte Silika ist.

5. Reifen nach Anspruch 1, wobei das hydrophobierte ausgefällte Silika das vorhydrophobierte ausgefällte Silika ist.

6. Reifen nach mindestens einem der vorgenannten Ansprüche, wobei die Kautschukzusammensetzung, auf Basis von Gewichtsteilen je 100 Gewichtsteile Kautschuk (ThK), umfasst:
(A) mindestens ein Elastomer auf Basis konjugierten Diens;
(B) 30 bis 120 ThK eines Verstärkungsfüllstoffs, umfassend:
(1) 30 bis 120 ThK ausgefälltes Silika, oder
(2) eine Kombination von ausgefälltem Silika und einem Kautschukverstärkungs-Carbon Black, umfassend 30 bis 120 ThK ausgefälltes Silika und Null bis 60 ThK Kautschukverstärkungs-Carbon Black;
wobei das ausgefällte Silika umfasst:
(a) 50 bis 95 Gewichtsprozent des in situ hydrophobierten ausgefällten Silikas, und 5 bis 50 Gewichtsprozent des hydrophilen ausgefällten Silikas; oder
(b) 20 bis 80 Gewichtsprozent, alternativ 20 bis 50 Gewichtsprozent, des vorhydrophobierten ausgefällten Silikas, und 80 bis 20 Gewichtsprozent, alternativ 80 bis 50 Gewichtsprozent, des hydrophilen ausgefällten Silikas.

7. Reifen nach Anspruch 2, wobei das Gewichtsverhältnis von hydrophilem ausgefälltem Silika zu dem hydrophobierten ausgefällten Silika in einem Bereich von 1,8:1 bis 2,5:1 liegt.

8. Verfahren zur Herstellung einer mit ausgefälltem Silika verstärkten Kautschukzusammensetzung für eine Reifenlauffläche, die duale Silikaanteile enthält, die ein in situ hydrophobiertes ausgefälltes Silika und ein hydrophiles ausgefälltes Silika umfassen, wobei das Verfahren mindestens zwei sequentielle vorbereitende nichtproduktive Mischschritte, gefolgt von einem produktiven Mischschritt, umfasst, und wobei das Verfahren, auf Basis von Gewichtsteilen je 100 Gewichtsteile Kautschuk (ThK), umfasst:
(A) Vermischen eines hydrophilen ausgefällten Silikas mit einer Kautschukzusammensetzung, die mindestens ein Elastomer auf Basis konjugierten Diens umfasst, in mindestens einem vorbereitenden nichtproduktiven Mischschritt in einem Innengummimischer, und Hydrophobieren besagten hydrophilen ausgefällten Silikas mit einem Hydrophobierungsmittel in situ innerhalb der Kautschukzusammensetzung in mindestens einem der nichtproduktiven Mischschritte, um **dadurch** eine hydrophobiertes ausgefälltes Silika enthaltende Kautschukzusammensetzung zu bilden;
(B) Entfernen der hydrophobiertes ausgefälltes Silika enthaltenden Kautschukzusammensetzung aus dem Innengummimischer; und
(C) Vermischen eines hydrophilen zusätzlichen ausgefällten Silikas mit der hydrophobiertes ausgefälltes Silika enthaltenden Kautschukzusammensetzung in mindestens einem unterschiedlichen und nachfolgenden vorbereitenden nichtproduktiven Mischschritt in einem Innengummimischer, um eine Kautschukzusammensetzung zu bilden, die duale Silikaanteile in einer Form einer Kombination besagten, in situ hydrophobierten ausgefällten Silikas und des hydrophilen zusätzlichen ausgefällten Silikas enthält;
wobei das in situ hydrophobierte ausgefällte Silika in situ innerhalb der Kautschukzusammensetzung durch Behandlung mit dem Hydrophobierungsmittel als ein Organoalkoxysilylpolysulfid, das ein Bis(3-triethoxysilylpropyl)polysulfid mit einem Durchschnitt von 2 bis 3,8 verbindenden Schwefelatomen in seiner Polysulfidbrücke umfasst, hydrophobiert wird.

9. Verfahren nach Anspruch 8, wobei das nachfolgende Mischen des hydrophilen ausgefällten Silikas angewendet wird:
(A) in einem separaten nichtproduktiven Mischschritt, der unmittelbar auf den Mischschritt des in situ Hydrophobierens des ausgefällten Silikas folgt; oder
(B) in einem separaten nichtproduktiven Mischschritt, der auf den Mischschritt des in situ Hydrophobierens des ausgefällten Silikas folgt, mit einem zusätzlichen separaten nichtproduktiven Mischschritt dazwischen; oder
(C) in einem separaten, nachfolgenden produktiven Mischschritt, worin der Kautschukzusammensetzung Schwefel und Schwefelvulkanisationsmittel zugesetzt werden.

10. Verfahren zur Herstellung einer mit einem dualen Anteil von ausgefälltem Silika verstärkten Kautschukzusammensetzung für eine Reifenlauffläche, welches das Mischen einer Kombination eines hydrophobierten ausgefällten Silikas und hydrophilen ausgefällten Silikas mit einer Kautschukzusammensetzung, die mindestens ein Elastomer auf Basis konjugierten Diens enthält, ohne einen Zusatz eines Silikahaftvermittlers oder Alkoxysilan-Silikahydrophobierungsmittels zu der Kautschukzusammensetzung, umfasst, wobei das vorhydrophobierte ausgefällte Silika vor seinem Zusatz zu der Kautschukzusammensetzung mit einem Hydrophobierungsmittel hydrophobiert wird, wobei das Hydrophobierungsmittel ein Organoalkoxysilylpolysulfid ist, das ein Bis(3-trialkoxysilylalkyl)polysulfid, das einen Durchschnitt von 2 bis 3,8 verbindenden Schwefelatomen in seiner Polysulfidbrücke aufweist, umfasst.

11. Verfahren nach Anspruch 10, wobei das Organoalkoxysilylpolysulfid ein Organoalkoxysilylpolysulfid ist, das ein Bis(3-trialkoxysilylalkyl)polysulfid, das einen Durchschnitt von 2 bis 2,6 verbindenden Schwefelatomen in seiner Polysulfidbrücke aufweist, umfasst.

12. Verfahren nach mindestens einem der Ansprüche 10 bis 11, wobei das Gewichtsverhältnis von hydrophilem ausgefälltem Silika zu vorhydrophobiertem ausgefälltem Silika mindestens 1:1 beträgt.

13. Verfahren nach mindestens einem der vorgenannten Ansprüche 10 bis 12, wobei das Mischen des hydrophilen ausgefällten Silikas und vorhydrophobierten ausgefällten Silikas mit der Kautschukzusammensetzung angewendet wird:
(A) in dem gleichen nichtproduktiven Mischschritt vor oder nach dem Zusetzen des vorhydrophobierten ausgefällten Silikas, oder
(B) in einem separaten nichtproduktiven Mischschritt, der auf das Zusetzen des vorhydrophobierten ausgefällten Silikas folgt, oder
(C) in einem separaten nichtproduktiven Mischschritt, der auf das Zusetzen des vorhydrophobierten ausgefällten Silikas folgt, mit einem zusätzlichen nichtproduktiven Mischschritt dazwischen, oder
(D) in einem separaten, nachfolgenden produktiven Mischschritt, worin der Kautschukzusammensetzung Schwefel und Schwefelvulkanisationsmittel zugesetzt werden.

## Revendications

1. Bandage pneumatique comprenant une bande de roulement circonférentielle en caoutchouc d'une composition de caoutchouc qui contient au moins deux fractions de silice comprenant de la silice précipitée hydrophile à titre d'une desdites deux fractions et de la silice précipitée rendue hydrophobe à titre de l'autre desdites deux fractions, ladite silice précipitée rendue hydrophobe tétant :
(A) rendue hydrophobe in situ au sein de la composition de caoutchouc par traitement avec un organoalcoxysilyl polysulfure comprenant un bis(3-triéthoxysilylpropyl polysulfure) possédant en moyenne de 2 à 3,8 atomes de soufre de liaison dans son pont polysulfure, et/ou
(B) rendue hydrophobe au préalable avant son addition à la composition de caoutchouc par traitement avec un organoalcoxysilyl polysulfure comprenant un bis(3-triéthoxysilylpropyl polysulfure) possédant en moyenne de 2 à 3,8 atomes de soufre de liaison dans son pont polysulfure.

2. Bandage pneumatique selon la revendication 1, dans lequel l'organoalcoxysilyl polysulfure comprend un bis(3-triéthoxysilylpropyl polysulfure) possédant en moyenne de 2 à 2,6 atomes de soufre de liaison dans son pont polysulfure.

3. Bandage pneumatique selon la revendication 1, dans lequel le rapport pondéral de la silice précipitée hydrophile à la silice précipitée rendue hydrophobe se situe dans la plage de 1,5/1 à 4/1.

4. Bandage pneumatique selon la revendication 1, dans lequel la silice précipitée rendue hydrophobe représente la silice précipitée rendue hydrophobe in situ.

5. Bandage pneumatique selon la revendication 1, dans lequel la silice précipitée rendue hydrophobe représente la silice précipitée rendue hydrophobe au préalable.

6. Bandage pneumatique selon au moins une des revendications précédentes, dans lequel la composition de caoutchouc comprend, basées sur des parties en poids par 100 parties en poids de caoutchouc (phr) :
(A) au moins un élastomère conjugué à base diénique ;
(B) à concurrence de 30 à 120 phr, une matière de charge de renforcement comprenant .
(1) à concurrence de 30 à 120 phr, de la silice précipitée ; ou
(2) une combinaison de silice précipitée et d'un noir de carbone pour le renforcement du caoutchouc, comprenant de la silice précipitée à concurrence de 30 à 120 phr et du noir de carbone pour le renforcement du caoutchouc, à concurrence de 0 jusqu'à 60 phr ;
la silice précipitée comprenant :
(a) à concurrence de 50 à 95 % en poids, la silice précipitée rendue hydrophobe in situ et à concurrence de 5 à 50 % en poids, la silice précipitée hydrophile ; ou
(b) à concurrence de 20 à 80 % en poids, en variante à concurrence de 20 à 50 % en poids la silice précipitée rendue hydrophobe au préalable, et à concurrence de 80 à 20 % en poids, en variante à concurrence de 80 à 50 % en poids, la silice précipitée hydrophile.

7. Bandage pneumatique selon la revendication 2, dans lequel le rapport pondéral de la silice précipitée hydrophile à la silice précipitée rendue hydrophobe se situe dans la plage de 1,8/1 25/1.

8. Procédé de préparation d'une composition de caoutchouc renforcé avec de la silice précipitée pour une bande de roulement de bandage pneumatique, qui contient une double fraction de silice comprenant une silice rendue hydrophobe in situ et une silice précipitée hydrophile, le procédé comprenant au moins deux étapes préparatoires séquentielles de mélange non productif suivie d'une étape de mélange productif, et dans lequel le procédé comprend le fait de, en se basant sur des parties en poids par 100 parties en poids de caoutchouc (phr) :
(A) mélanger une silice précipitée hydrophile avec une composition de caoutchouc comprenant au moins un élastomère conjugué à base diénique, dans au moins une étape préparatoire de mélange non productif dans un mélange de caoutchouc interne, et le fait de rendre hydrophobe ladite silice précipitée hydrophile avec un agent rendant hydrophobe, in situ au sein de ladite composition de caoutchouc, dans au moins une petite étape de mélange non productif pour ainsi obtenir une composition de caoutchouc contenant de la silice précipitée rendue hydrophobe ;
(B) retirer du mélangeur de caoutchouc interne ladite composition de caoutchouc contenant de la silice précipitée rendue hydrophobe ; et
(C) mélanger une silice précipitée supplémentaire hydrophile avec ladite composition de caoutchouc contenant de la silice précipitée rendue hydrophobe dans au moins une étape préparatoire différente et ultérieure de mélange non productif dans un mélangeur de caoutchouc interne, afin d'obtenir une composition de caoutchouc qui contient deux fractions de silice sous la forme d'une combinaison de ladite silice précipitée rendue hydrophobe in situ et de ladite silice précipitée supplémentaire hydrophile ;
dans lequel ladite silice précipitée rendue hydrophobe in situ est rendue hydrophobe in situ au sein de la composition de caoutchouc par traitement avec l'agent rendant hydrophobe sous la forme d'un bis (3-triéthoxysilylpropyl polysulfure) possédant en moyenne de 2 à 3,8 atomes de soufre de liaison dans son pont polysulfure.

9. Procédé selon la revendication 8, dans lequel le mélange ultérieur de la silice précipitée hydrophile est administré :
(A) dans une étape séparée de mélange non productif qui suit immédiatement l'étape de mélange pour rendre hydrophobe in situ la silice précipitée ; ou
(B) dans une étape séparée de mélange non productif qui suit l'étape de mélange pour rendre hydrophobe in situ la silice précipitée, en intercalant une étape séparée supplémentaire de mélange non productif entre les deux ; ou
(C) dans une étape séparée ultérieure de mélange productif dans laquelle on ajoute à la composition de caoutchouc le soufre et les adjuvants contenant du soufre.

10. Procédé de préparation d'une composition de caoutchouc renforcé avec deux fractions de silice précipitée pour une bande de roulement de bandage pneumatique, qui comprend le fait de mélanger une combinaison d'une silice précipitée rendue hydrophobe au préalable et d'une silice précipitée hydrophile avec une composition de caoutchouc contenant au moins un élastomère conjugué à base diénique sans l'addition d'un agent de couplage de la silice ou d'un agent rendant la silice hydrophobe à base d'alcoxysilane, à la composition de caoutchouc, ladite silice précipitée rendue hydrophobe au préalable étant rendue hydrophobe avec un agent rendant hydrophobe avant son addition ladite composition de caoutchouc, l'agent rendant hydrophobe représentant un organoalcoxysilyl polysulfure comprenant un bis(3-triéthoxysilylpropyl polysulfure) possédant en moyenne de 2 à 3,8 atomes de soufre de liaison dans son pont polysulfure.

11. Procédé selon la revendication 10, dans lequel l'organoalcoxysilyl polysulfure est un organoalcoxysilyl polysulfure qui comprend un bis(3-triéthoxysilylpropyl polysulfure) possédant en moyenne de 2 à 2,6 atomes de soufre de liaison dans son pont polysulfure.

12. Procédé selon au moins une des revendications 10 à 11, dans lequel le rapport pondéral de la silice précipitée hydrophile à la silice précipitée rendue hydrophobe au préalable s'élève à au moins 1/1.

13. Procédé selon au moins une des revendications 10 à 12, dans lequel ledit mélange de la silice précipitée hydrophile et de la silice de précipitée rendue hydrophobe au préalable, avec la composition de caoutchouc est administré :
(A) dans la même étape de mélange non productif avant ou après l'addition de la silice précipitée rendue hydrophobe au préalable ; ou
(B) dans une étape séparée de mélange non productif faisant suite à l'addition de la silice précipitée rendue hydrophobe au préalable ; ou
(C) dans une étape séparée de mélange non productif faisant suite à l'addition de la silice précipitée rendue hydrophobe au préalable, en intercalant une étape séparée supplémentaire de mélange non productif entre les deux ; ou
(D) dans une étape séparée ultérieure de mélange productif dans laquelle on ajoute à la composition de caoutchouc le soufre et les adjuvants contenant du soufre.
